# FASCICULE DE BREVET EUROPEEN

(11) **EP 1 956 254 B1**
(45) Date de publication et mention de la délivrance du brevet: **23.09.2009**
(21) Numéro de dépôt: 07101820.4
(22) Date de dépôt: 06.02.2007
(51) Int. Cl.: F16C 25/08, F16C 33/41, B62D 1/16

(54) **Dispositif de roulement et colonne de direction**
Rollvorrichtung und Lenksäule
Bearing device and steering column

(43) Date de publication de la demande: 13.08.2008
(60) Demande divisionnaire: 09167434.1
(73) Titulaire: Aktiebolaget SKF, 415 50 Göteborg (SE)
(72) Inventeur: Delos, Jacques, 45390 Desmonts (FR); Monboeuf, Bruno, 37390 Cerelles (FR)
(74) Mandataire: de Kernier, Gabriel

(56) Documents cités:
- WO-A-03/023242
- DE-A1- 19 604 036
- FR-A1- 2 594 189
- FR-A1- 2 861 441
- US-A- 3 876 266
- US-A- 6 158 896

## Description

L'invention concerne le domaine des paliers à roulement, notamment pour colonnes de direction.

On connaît, par les documents FR 2 594 189 et US 3 876 266, des roulements pourvus de pistes rapportées en tôle emboutie et d'une rondelle de caoutchouc en forme de tore disposée dans l'enveloppe pour assurer la précontrainte élastique. Les pistes rapportées sont relativement onéreuses à fabriquer en raison des étapes de découpe avec perte de matière, d'emboutissage et de traitement thermique. Le moulage d'une rondelle en caoutchouc est également une opération relativement onéreuse.

Le document WO 03/023 242 décrit un palier à roulement pour colonne de direction comprenant une enveloppe extérieure à section en U, au moins deux fils en acier traité disposés dans l'enveloppe extérieure et des éléments roulants tels que des billes disposés au contact des fils qui constituent les chemins de roulement. Les fils se présentent sous la forme de joncs annulaires dont les extrémités viennent bout à bout lors de leur mise en place dans l'enveloppe. La bague intérieure peut être de type massive avec un chemin de roulement ou comporter également une enveloppe et deux joncs. On réalise ainsi un roulement à trois ou quatre points de contact capable de fonctionner aussi bien sous charge axiale que sous charge radiale ou sous charge combinée. Afin que le roulement puisse fonctionner sans jeu, comme cela est généralement requis dans les colonnes de direction, on dispose une rondelle de précontrainte conique de type « Belleville » entre l'une des portions radiales de l'enveloppe extérieure et le jonc correspondant. Le fonctionnement d'une tel palier donne satisfaction. Toutefois, le coût de la rondelle métallique élastique est relativement élevé.

Un tel palier à roulement, selon le préambule de la revendication 1, est aussi connu du document FR 2 861 441 A.

La présente invention vise à remédier aux inconvénients décrits ci-dessus.

La présente invention vise un palier à roulement de fabrication particulièrement économique.

Tel qu'il est revendiqué un dispositif de roulement comprend une bague extérieure et une bague intérieure munies chacune d'un chemin de roulement pour des éléments roulants disposés entre lesdites bagues au contact desdits chemins de roulement. Au moins l'une des bagues comprend une enveloppe pourvue d'une portion axiale et de deux portions radiales se raccordant aux extrémités de la portion axiale et deux joncs annulaires disposés dans ladite enveloppe pour former des chemins de roulement.

Selon l'invention, le dispositif comprend au moins un élément annulaire de précontrainte réalisé en matière élastique et de section sensiblement rectangulaire à l'état libre. Ledit élément annulaire de précontrainte est disposé dans l'enveloppe pour être précontraint axialement entre l'une des portions radiales de ladite enveloppe et une face latérale d'un des joncs.

L'enveloppe comprend, au moins d'un côté, une portion axiale dirigée vers l'intérieur et se raccordant sur la portion radiale pour former une chambre annulaire à section droite en U dans laquelle est disposé au moins en partie l'élément annulaire de précontrainte.

L'élément de précontrainte bénéficie ainsi d'un positionnement stable et la portion radiale de la bague présente une rigidité axiale élevée grâce à la portion axiale supplémentaire dirigée vers l'intérieur.

Dans un mode de réalisation, l'élément annulaire de précontrainte comprend un élastomère. L'élastomère peut être du caoutchouc nitrile, du polyuréthane, ou encore de l'éthylène-propylène-dyène monomère (EPDM).

Dans un mode de réalisation, la dureté shore de l'élément annulaire de précontrainte est comprise entre 67 et 87 shore.

Dans un mode de réalisation, les éléments roulants sont maintenus circonférentiellement espacés par une cage. La cage est pourvue d'un talon annulaire disposé axialement du côté opposé à l'élément de précontrainte.

Dans un mode de réalisation, le chemin de roulement intérieur présente un rayon supérieur d'au moins 5% aux rayons des éléments roulants. Les éléments roulants sont alors des billes.

La rondelle de précontrainte peut être fabriquée par tronçonnage d'un tube de matière souple.

La présente invention concerne également une colonne de direction comprenant un logement, un arbre et un dispositif de roulement tel que décrit ci-dessus disposé entre le logement et l'arbre. La bague intérieure peut être montée sur l'arbre en contact d'un épaulement qui assure son positionnement axial.

La déformation élastique de l'élément à section rectangulaire qui forme un élément de précontrainte maintient la précontrainte de façon permanente. Il s'avère avantageux de maintenir les éléments roulants par une cage, de telle sorte que la bague intérieure, les éléments roulants et la cage puissent être manipulés avec un faible risque de perte de pièces.

On bénéficie ainsi d'un roulement particulièrement économique et bien adapté aux colonnes de direction dans lesquelles les vitesses de rotation sont faibles, mais les désalignements possibles de l'arbre par rapport au logement peuvent être élevés. D'autre part, les roulements de colonne de direction doivent fonctionner avec un jeu nul et un couple de rotation aussi réduit et aussi constant que possible.

La présente invention sera mieux comprise à l'étude de la description de quelques modes de réalisation pris à titre d'exemples nullement limitatifs et illustrés par les dessins annexés, sur lesquels :
- la figure 1 est une vue schématique en coupe axiale d'une partie de colonne de direction ;
- la figure 2 est une vue de côté en élévation d'un tube en élastomère en cours de découpe ;
- la figure 3 est une vue de face en élévation d'un élément de précontrainte ;
- la figure 4 est une vue de détail en coupe radiale de l'élément de précontrainte de la figure 3 ;
- la figure 5 est une vue partielle en coupe axiale d'un palier à roulement ;

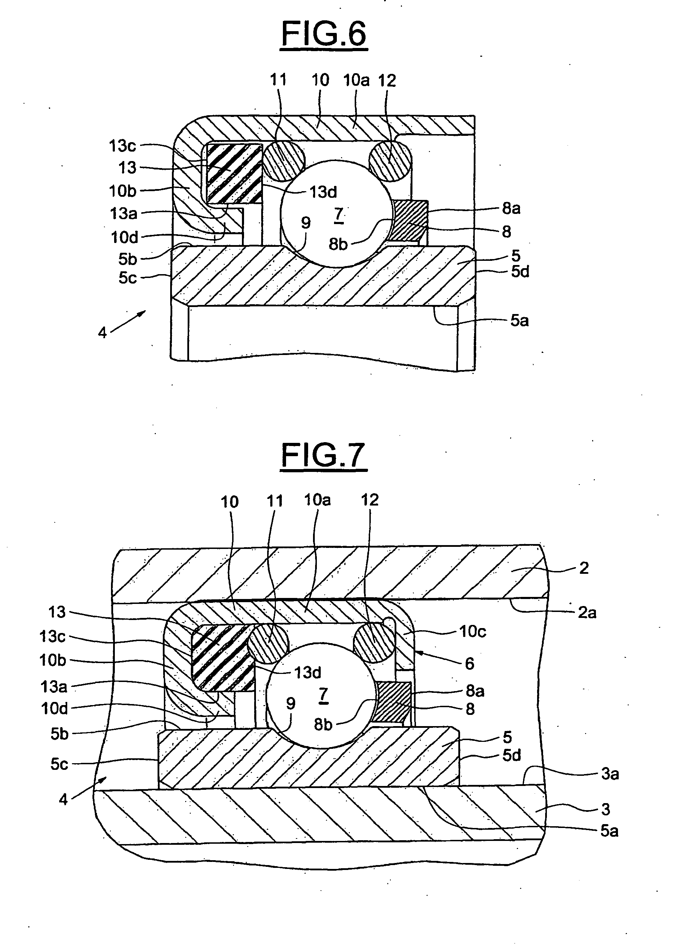

- la figure 6 est une vue du palier de la figure 5 en cours de montage ; et
- la figure 7 est une vue de détail de la figure 1.

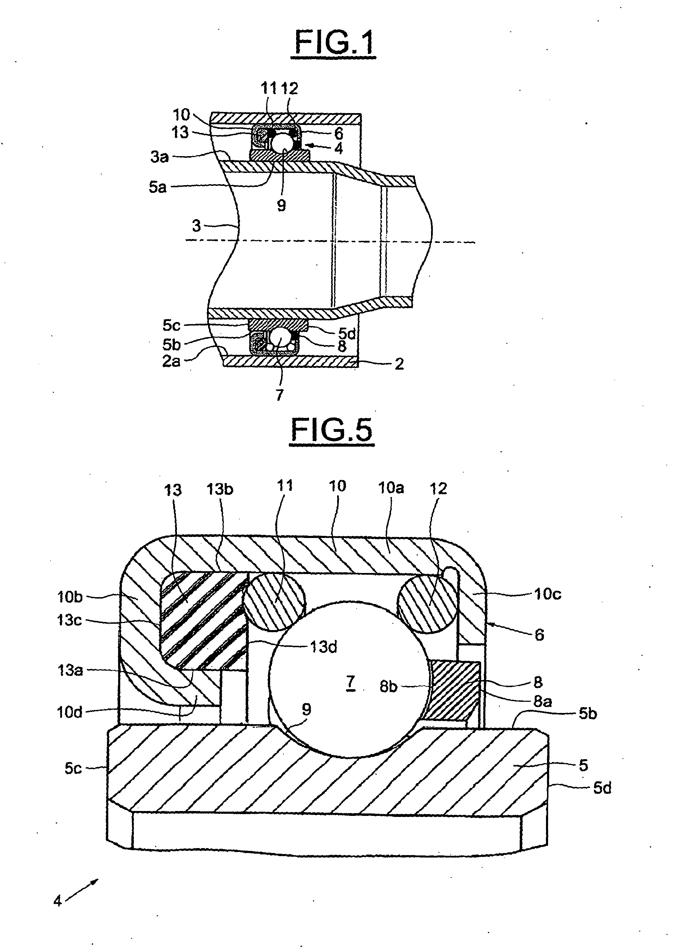

Comme on peut le voir sur la figure 1, la colonne de direction 1 comprend un logement 2 tubulaire pourvu d'un alésage 2a, un arbre 3 pourvu d'une surface extérieure axiale 3a, et un palier à roulement 4 disposé entre l'alésage 2a du logement 2 et la surface extérieure 3a de l'arbre 3.

Comme on peut le voir sur les figures 1 et 5, le palier à roulement 4 comprend une bague intérieure 5, une bague extérieure 6, une rangée d'éléments roulants 7, ici des billes, et une cage 8 de maintien de l'espacement circonférentiel des éléments roulants 7. La bague intérieure 5 est de type à gorge profonde et comprend un alésage 5a en contact avec la surface extérieure 3a de l'arbre 3, une surface extérieure 5b et deux surfaces frontales radiales 5c et 5d. Un chemin de roulement 9 de forme toroïdale est ménagé, par exemple par usinage, à partir de la surface extérieure 5b et est en contact avec les éléments roulants 7. Dans l'exemple illustré sur la figure 5, le chemin de roulement 9 présente un rayon pris en section axiale nettement supérieur aux rayons des éléments roulants 7, ici des billes.

La cage 8 présente des alvéoles 8b dans lesquelles sont disposés les éléments roulants 7 et un talon annulaire 8a permettant de relier ensemble les portions de cage disposées entre les alvéoles. Le talon 8a s'étend axialement du côté de la surface frontale 5d.

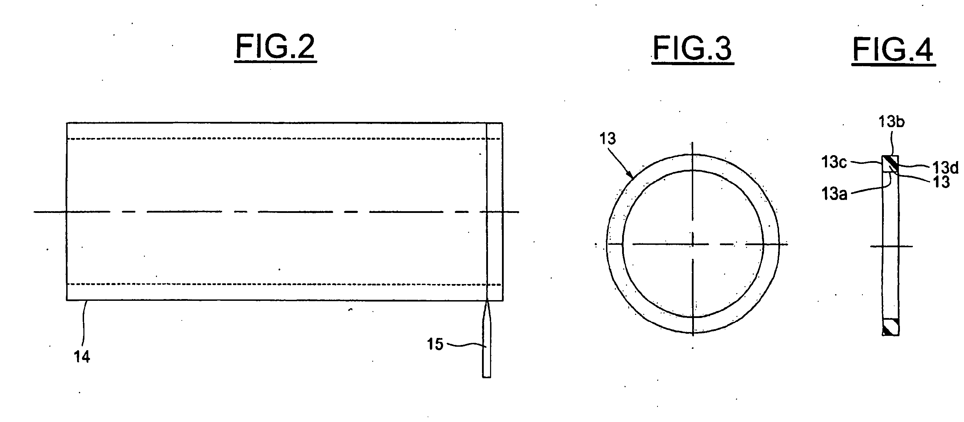

La bague extérieure 6 comprend une enveloppe 10 annulaire, par exemple formée à partir de tôle d'acier, deux joncs 11 et 12, chacun formé par exemple à partir d'un fil d'acier plié en forme de tore avec extrémités en contact mutuel, et une rondelle de précontrainte 13. La rondelle de précontrainte 13 est avantageusement formée à partir d'un matériau élastique, par exemple à base d'élastomère. On peut donner à titre d'exemple d'élastomère, le caoutchouc nitrile, le polyuréthane, ou encore l'éthylène-propylène-dyène monomère, connu aussi sous l'abréviation EPDM. La rondelle de précontrainte 13 présente à l'état libre, illustré sur la figure 4, une section rectangulaire avec un alésage 13a, une surface extérieure axiale 13b et deux surfaces radiales 13c et 13d.

L'enveloppe 10 comprend une partie axiale 10a, deux portions radiales lOb et 10c formées aux extrémités de la portion axiale 10a et s'étendant radialement vers l'intérieur, et une portion axiale 10d formée à partir de l'extrémité de petit diamètre de la portion radiale 10b et s'étendant en direction des éléments roulants 7. En d'autres termes, le rebord axial 10d forme une portion axiale de petit diamètre par rapport à la portion axiale 10a de grand diamètre. La portion axiale 10a, la portion radiale 10b et le rebord axial 10d présentent une épaisseur sensiblement constante et forment une chambre annulaire fermée sur trois côtés et ouverte axialement sur un côté et dans laquelle est montée la rondelle de précontrainte 13. En raison des congés de raccordement entre la portion axiale 10a, la portion radiale 10b et le rebord axial 10d, la rondelle de précontrainte 13 est légèrement déformée, en particulier dans les angles saillants entre l'alésage 13a et la surface radiale 13c et entre la surface extérieure axiale 13b et la surface radiale 13c. La portion radiale 10c, disposée du côté opposé à la portion radiale 10b, présente une épaisseur réduite par rapport aux autres portions de l'enveloppe 10, ce qui permet son sertissage à la fin du montage du roulement, et ce en limitant le risque de déformation des autres parties.

Le jonc 11 est disposé en contact avec l'alésage de la portion axiale 10a de l'enveloppe 10 et avec la surface radiale 13d de la rondelle de précontrainte 13, du côté opposé à la portion radiale 10b. Le jonc 11 est également en contact avec les éléments roulants 7. Le jonc 12 est en contact avec l'alésage de la portion axiale 10a et avec la surface radiale intérieure de la portion radiale 10c de l'enveloppe 10 et est également en contact avec les éléments roulants 7. Les joncs 11 et 12 assurent ainsi chacun un point de contact avec les éléments roulants et permettent donc de reprendre des charges radiales mais également axiales. Les joncs 11 et 12 peuvent être identiques et fabriqués par pliage d'un fil d'acier pré-traité, ce qui est très économique.

La tangente au point de contact entre les éléments roulants 7 et le jonc 11 est sensiblement inclinée à 45° par rapport à l'axe. Il en va de même de la tangente au point de contact entre les éléments roulants 7 et le jonc 12, de telle sorte que lesdites deux tangentes présentent entre elles un angle de l'ordre de 90°, d'où un excellent contact oblique entre chaque jonc 11, 12 et les éléments roulants 7. La suppression du jeu est assurée par l'enfermement de la rondelle de précontrainte 13 et des joncs 11 et 12 entre les portions radiales 10b et 10c de l'enveloppe 10, et par l'élasticité axiale de la rondelle de précontrainte 13 dont la surface radiale 13d est déformée par l'appui exercé sur le jonc 11. La rondelle de précontrainte 13 assure ainsi une précontrainte permanente axiale sur le jonc 11 et permet de supprimer le jeu entre le jonc 11, les éléments roulants 7 et le jonc 12.

La rondelle de précontrainte 13 est souple et déformable et est très bien centrée entre la portion axiale 10a et le rebord axial 10d et maintenue dans cet espace annulaire, ce qui permet de faciliter les opérations d'assemblage en évitant à la rondelle 13 de prendre accidentellement une forme non circulaire ou de s'échapper de sa position correcte dans l'enveloppe 10 lors des manipulations de pièces. On peut ainsi automatiser plus facilement les opérations d'assemblage et les porter à un haut degré de fiabilité. En outre, la rondelle de précontrainte 13 étant maintenue radialement entre deux parois axiales, lors de la mise en précontrainte, la matière constitutive de ladite rondelle de précontrainte 13 ne peut pas fluer radialement, ce qui diminuerait l'élasticité axiale et l'efficacité de ladite rondelle de précontrainte 13.

Le rebord axial 10d dirigé vers les éléments roulants 7, présente deux autres avantages, à savoir un raidissement de la structure de l'enveloppe 10 et la possibilité de réaliser un passage étroit avec la bague intérieure 5 sur une certaine longueur axiale, ce qui renforce la protection du roulement 4 contre l'intrusion d'éléments polluants en provenance de l'extérieur. En d'autres termes, l'étanchéité par passage étroit est formée entre le rebord axial 10d et la surface extérieure axiale 5b de la rondelle intérieure 5 située du côté de la surface frontale 5c.

La rondelle de précontrainte 13 possède à l'état libre une section sensiblement rectangulaire en section droite, ce qui lui permet d'être réalisée à partir d'un tube de matière souple. On peut utiliser à cet usage un élastomère sous la forme d'un tube extrudé 14, voir figure 2, ce mode de fabrication par extrudage étant particulièrement économique, ledit tube étant ensuite tronçonné en rondelles à l'épaisseur désirée au moyen d'un outil coupant 15. Avantageusement, la dureté shore du matériau de la rondelle de précontrainte 13 sera choisie dans une fourchette comprise entre 67 et 87 shore. Ce procédé est extrêmement économique par rapport à un procédé de fabrication par moulage de la rondelle.

Pour l'assemblage du roulement, on peut, d'une part, constituer un sous-ensemble comprenant la bague intérieure 5, les éléments roulants 7 et la cage 8, et, d'autre part, amener la rondelle de précontrainte 13 dans l'enveloppe 10, la portion radiale 10c n'ayant pas encore été sertie et se présentant donc comme une prolongation axiale de la portion axiale 10a. La rondelle de précontrainte 13 est ainsi amenée par un simple mouvement axial. Puis on amène le jonc 11 en contact avec la rondelle de précontrainte 13 et l'alésage de la portion axiale 10a de l'enveloppe 10, puis le sous-ensemble constitué par la bague intérieure 5, les éléments roulants 7 et la cage 8, les éléments roulants 7 venant en contact avec le jonc 11, puis le jonc 12 en contact avec les éléments roulants 7 et l'alésage de la portion axiale 10a de l'enveloppe 10. Ensuite, on procède au sertissage de la portion radiale 10c pour lui conférer sa forme définitive illustrée sur les figures 1 et 5. La portion radiale 10c vient alors en contact avec le jonc 12 qu'elle tend à déplacer en direction de la portion radiale opposée 10d, d'où une déformation de la rondelle de précontrainte 13 et une mise en précontrainte de l'ensemble de ces éléments en contact.

On réalise ainsi un roulement de colonne de direction économique et fiable.

## Revendications

1. Dispositif de roulement (4) comprenant une bague extérieure (6) et une bague intérieure (5) munies chacune d'un chemin de roulement pour des éléments roulants (7) disposés entre lesdites bagues au contact desdits chemins de roulement, au moins l'une des bagues comprenant une enveloppe (10) pourvue d'une portion axiale et de deux portions radiales se raccordant aux extrémités de la portion axiale et deux joncs annulaires (11, 12) disposés dans ladite enveloppe pour former des chemins de roulement, **caractérisé par le fait qu'**il comprend au moins un élément annulaire (13) de précontrainte réalisé en matière élastique et de section sensiblement rectangulaire à l'état libre, ledit élément annulaire de précontrainte étant disposé dans l'enveloppe pour être précontraint axialement entre l'une des portions radiales de ladite enveloppe et une face latérale d'un des joncs, l'enveloppe (10) comprenant, au moins d'un côté, une portion axiale dirigée vers l'intérieur et se raccordant sur la porion radiale pour former une chambre annulaire à section droite en U dans laquelle est disposé au moins en partie l'élément annulaire (13) de précontrainte.

2. Dispositif selon la revendication 1, dans lequel l'élément annulaire (13) de précontrainte est réalisé en élastomère.

3. Dispositif selon la revendication 2, dans lequel l'élément annulaire (13) de précontrainte comprend du caoutchouc nitrile.

4. Dispositif selon la revendication 2, dans lequel l'élément annulaire (13) de précontrainte comprend du polyuréthane.

5. Dispositif selon la revendication 2, dans lequel l'élément annulaire (13) de précontrainte comprend de l'éthylène-propylène-dyène monomère (EPDM).

6. Dispositif selon l'une quelconque des revendications précédentes, dans lequel la dureté shore de l'élément annulaire (13) de précontrainte est comprise entre 67 et 87 shore.

7. Dispositif selon l'une quelconque des revendications précédentes, dans lequel les éléments roulants (7) sont maintenus circonférentiellement espacés par une cage (8) pourvue d'un talon (8a) annulaire disposé axialement du côté opposé à l'élément annulaire (13) de précontrainte.

8. Dispositif selon l'une quelconque des revendications précédentes, dans lequel l'autre chemin de roulement présente un rayon supérieur d'au moins 5% au rayon des éléments roulants.

9. Dispositif selon l'une quelconque des revendications précédentes, dans lequel l'élément annulaire (13) de précontrainte est fabriquée par tronçonnage d'un tube de matière souple.

10. Colonne de direction (1) comprenant un arbre (3), un logement (2) et un dispositif selon l'une quelconque des revendications précédentes, disposé entre l'arbre et le logement.

## Claims

1. Rolling-contact bearing device (4) comprising an outer race (6) and an inner race (5), both having a raceway for rolling elements (7) placed between the said races in contact with the said raceways, at least one of the races comprising an envelope (10) having an axial portion and, connected to the edges of the axial portion, two radial portions, and two annular wires (11, 12) arranged in the said envelope to form raceways, which device is **characterized in that** it comprises at least one annular prestress element (13) made of an elastic material, its cross section being basically rectangular in the free state, the said annular prestress element being arranged inside the envelope to be prestressed axially between one of the radial portions of the said envelope and a lateral face of one of the wires, the envelope (10) comprising, on at least one side, an in-turned axial portion connected to the radial portion to form an annular chamber shaped like a U in right cross section in which the annular prestress element (13) is at least partly positioned.

2. Device according to Claim 1, in which the annular prestress element (13) is made of an elastomer.

3. Device according to Claim 2, in which the annular prestress element (13) comprises nitrile rubber.

4. Device according to Claim 2, in which the annular prestress element (13) comprises polyurethane.

5. Device according to Claim 2, in which the annular prestress element (13) comprises ethylene propylene diene monomer (EPDM).

6. Device according to any one of the preceding claims, in which the Shore hardness of the annular prestress element (13) is between 67 and 87 Shore.

7. Device according to any one of the preceding claims, in which the rolling elements (7) are separated circumferentially by a cage (8) having an annular extension (8a) positioned axially on the opposite side from the annular prestress element (13).

8. Device according to any one of the preceding claims, in which the other raceway has a radius at least 5% greater than the radius of the rolling elements.

9. Device according to any one of the preceding claims, in which the annular prestress element (13) is cut from a tube of flexible material.

10. Steering column (1) comprising a shaft (3), a housing (2) and, between the shaft and the housing, a device according to any one of the preceding claims.

## Patentansprüche

1. Wälzvorrichtung (4), die einen Außenring (6) und einen Innenring (5) aufweist, die jeweils mit einer Rollbahn für Wälzelemente (7) versehen sind, die zwischen den genannten Ringen in Kontakt mit den Rollbahnen angeordnet sind, wobei wenigstens einer der Ringe eine Umhüllung (10), die mit einem axialen Teil und zwei radialen Teilen versehen ist, die mit Enden des axialen Teils verbunden sind, und zwei Ringwulste (11, 12) besitzt, um Rollbahnen auszubilden, **dadurch gekennzeichnet, dass** sie wenigstens ein ringförmiges Vorspannelement (13) aufweist, das aus einem elastischen Material mit im freien Zustand ungefähr rechteckigem Querschnitt besteht, wobei das ringförmige Vorspannelement in der Umhüllung angeordnet ist, um zwischen einem der radialen Teile der Umhüllung und einer Seitenfläche eines der Wulste axial vorgespannt zu sein, und die Umhüllung (10) auf wenigstens einer Seite einen axialen Teil aufweist, der nach innen gerichtet und mit dem radialen Teil verbunden ist, um eine ringförmige Kammer mit U-förmigem Querschnitt zu bilden, in welcher wenigstens ein Teil des ringförmigen Vorspannelements (13) angeordnet ist.

2. Vorrichtung nach Anspruch 1, bei welcher das ringförmige Vorspannelement (13) aus einem Elastomer besteht.

3. Vorrichtung nach Anspruch 2, bei welcher das ringförmige Vorspannelement (13) Nitrilkautschuk enthält.

4. Vorrichtung nach Anspruch 2, bei welcher das ringförmige Vorspannelement (13) Polyurethan enthält.

5. Vorrichtung nach Anspruch 2, bei welcher das ringförmige Vorspannelement (13) Ethylen/Propylen-Dien-Monomer (EPDM) enthält.

6. Vorrichtung nach einem der vorhergehenden Ansprüche, bei welcher die Shorehärte des ringförmigen Vorspannelements (13) zwischen 67 und 85 Shore liegt.

7. Vorrichtung nach einem der vorhergehenden Ansprüche, bei welcher die Wälzkörper (7) in Umfangsabständen durch einen Käfig (8) gehalten sind, der mit einem ringförmigen Absatz (8a) versehen ist, der axial an der dem ringförmigen Vorspannelement (13) gegenüberliegenden Seite angeordnet ist.

8. Vorrichtung nach einem der vorhergehenden Ansprüche, bei welcher die andere Rollbahn einen Radius aufweist, der wenigstens 5% größer als der Radius der Wälzelemente ist.

9. Vorrichtung nach einem der vorhergehenden Ansprüche, bei welcher das ringförmige Vorspannelement (13) durch Ablängen von einem Schlauch aus nachgiebigem Material hergestellt ist.

10. Lenksäule (1), die eine Welle (3), eine Lagerung (2) und eine Vorrichtung nach einem der vorhergehenden Ansprüche aufweist, die zwischen der Welle und der Lagerung angeordnet ist.
